# EUROPÄISCHE PATENTSCHRIFT

(11) **EP 3 657 068 B1**
(45) Veröffentlichungstag und Bekanntmachung des Hinweises auf die Patenterteilung: **07.10.2026**
(21) Anmeldenummer: 18207746.1
(22) Anmeldetag: 22.11.2018
(51) Int. Cl.: F21S 41/29, F21S 41/24, F21S 41/16, F21S 41/141, F21S 41/176, F21S 43/251, F21S 43/27, F21S 43/16, F21S 43/10, F21S 43/14, B60Q 1/00, F21S 45/10, B60Q 1/068, F21S 41/63, F21V 8/00, G02B 6/44, H02G 3/04

(54) **VORRICHTUNG ZUR ERZEUGUNG UND ABSTRAHLUNG VON LICHT**
DEVICE FOR THE CREATION AND EMISSION OF LIGHT
DISPOSITIF DE PRODUCTION ET D'ÉMISSION DE LUMIÈRE

(43) Veröffentlichungstag der Anmeldung: 27.05.2020
(73) Patentinhaber: ZKW Group GmbH, 3250 Wieselburg (AT)
(72) Erfinder: Grausam, Manuel, 3325 Ferschnitz (AT); Schadenhofer, Peter, 3382 Roggendorf (AT); Pritzl, Leopold, 3254 Bergland (AT); Edletzberger, Thomas, 3382 Loosdorf (AT)
(74) Vertreter: Patentanwaltskanzlei Matschnig & Forsthuber OG

(56) Entgegenhaltungen:
- EP-A1- 0 265 892
- EP-A1- 1 011 180
- WO-A2-2014/049056
- DE-A1- 10 253 390
- DE-A1- 19 730 133
- DE-A1- 4 341 234
- DE-T2- 60 032 839
- GB-A- 2 357 857
- US-A1- 2005 116 176
- US-A1- 2012 069 593

## Beschreibung

Die Erfindung betrifft einen Kraftfahrzeugscheinwerfer mit den Merkmalen des Anspruchs 1.

Aus dem Stand der Technik sind zahlreiche Kraftfahrzeugscheinwerfer für Kraftfahrzeuge bekannt, bei welchen ein Leuchtmittel, welches Licht erzeugt, und eine Lichtabstrahlvorrichtung, welche das Licht auf eine Fahrbahn abstrahlt, räumlich voneinander getrennt sind. Oftmals ist die Lichtabstrahlvorrichtung innerhalb und das Leuchtmittel außerhalb eines Kraftfahrzeugscheinwerfers angeordnet. Dadurch kann die Bauteilgröße des Kraftfahrzeugscheinwerfers reduziert werden, da innerhalb des Kraftfahrzeugscheinwerfers kein Leuchtmittel vorgesehen ist.

DE 600 32 839 T2 betrifft eine Vorrichtung zur Beleuchtung und/oder Signalgebung für ein Fahrzeug. US 2012/069593 A1 zeigt einen Fahrzeugscheinwerfer, umfassend eine Anregungslichtquelle zum Emittieren von Anregungslicht, und einen lichtemittierenden Abschnitt zum Empfangen des Anregungslichts und zum Emittieren von Licht. EP 0 265 892 A1 zeigt eine Anordnung zum Lenken von zugeordneten Lichtstrahlen auf zugeordnete Objekte oder Flächen innerhalb eines Gehäuses. EP 1 011 180 A1 zeigt eine Vorrichtung zur Aufnahme von langgestreckten biegsamen Gegenständen, insbesondere zum Verlegen von elektrischen und/oder optischen Leitungen, mit wenigstens einem aus einer Vielzahl von einzelnen Kanalgliedern zusammengesetzten Aufnahmekanal.

Um einen derartigen Aufbau realisieren zu können, ist ein Lichtleiter vorgesehen, welcher das Licht vom Leuchtmittel zur Lichtabstrahlvorrichtung leitet, wobei der Lichtleiter üblicherweise im vorderen Bereich des Motorraums des Kraftfahrzeugs verläuft. Dies kann problematisch sein, wenn die Lichtabstrahlvorrichtung verschwenkbar ist, da deren Bewegung auf den Lichtleiter übertragen werden kann, wodurch sich dieser beispielsweise an Kanten von Bauteilen innerhalb des Motoraums verhaken oder verfangen kann, wobei dies zu Beschädigungen des Lichtleiters führen kann.

Die Aufgabe der vorliegenden Erfindung besteht darin, die Nachteile des Standes der Technik zu lindern bzw. zu beseitigen. Die Erfindung setzt sich daher insbesondere zum Ziel, einen Kraftfahrzeugscheinwerfer zu schaffen, bei welchem der das Leuchtmittel und die Lichtabstrahlvorrichtung verbindende Lichtleiter auch bei einem Verschwenken der Lichtabstrahlvorrichtung möglichst beschädigungsfrei bleibt.

Diese Aufgabe wird durch einen Kraftfahrzeugscheinwerfer mit den Merkmalen von Anspruch 1 gelöst. Bevorzugte Ausführungen sind in den abhängigen Ansprüchen angegeben.

Erfindungsgemäß ist zumindest ein Abschnitt des zumindest einen Lichtleiters in einem Lichtleitergehäuse angeordnet, so dass der in dem Lichtleitergehäuse angeordnete zumindest eine Abschnitt des zumindest einen Lichtleiters bei einer Bewegung des Lichtleiters auf Grund einer Verschwenkung der Haltevorrichtung oder der Lichtabstrahlvorrichtung durch die Verschwenkvorrichtung innerhalb des Lichtleitergehäuses geführt wird, wobei das Lichtleitergehäuse von dem Leuchtmittel und dem Lichtemitter beabstandet angeordnet ist.

Bei der erfindungsgemäßen Vorrichtung sind die Lichtabstrahlvorrichtung und das Leuchtmittel räumlich voneinander getrennt. Dies bedeutet, dass das Leuchtmittel nicht Teil der Lichtabstrahlvorrichtung ist, sondern außerhalb der Lichtabstrahlvorrichtung angeordnet ist. Der Raum, welcher durch die Lichtabstrahlvorrichtung eingenommen wird bzw. die räumlichen Grenzen der Lichtabstrahlvorrichtung werden im Wesentlichen durch die Haltevorrichtung vorgegeben, diese kann beispielsweise als Rahmen oder als Gehäuse ausgestaltet sein. Durch die Anordnung des Leuchtmittels außerhalb der Lichtabstrahlvorrichtung kann die Größe der Lichtabstrahlvorrichtung und beispielsweise auch die Größe eines Kraftfahrzeugscheinwerfers, welcher die Lichtabstrahlvorrichtung aufweist, reduziert werden. Das Leuchtmittel ist vorzugsweise ortsfest und außerhalb der Lichtabstrahlvorrichtung befestigt und somit unverschwenkbar. Im Gegensatz dazu ist die Lichtabstrahlvorrichtung verschwenkbar, um beispielsweise ein adaptives Kurvenlicht realisieren zu können. Durch das erfindungsgemäße Lichtleitergehäuse ergibt sich der Vorteil, dass eine mögliche Bewegung des Lichtleiters auf Grund einer Verschwenkung der Lichtabstrahlvorrichtung kontrollierbar erfolgt, da die Bewegung innerhalb des Lichtleitergehäuses geführt wird. Der Abschnitt des Lichtleiters, der innerhalb des Lichtleitergehäuses verläuft, kann sich somit nicht in eine willkürliche Richtung bewegen. Demnach werden die Freiheitsgrade des Lichtleiters teilweise eingeschränkt, wodurch ein Verhaken an einem benachbarten Bauteil nicht möglich ist. Der im Lichtleitergehäuse geführte Abschnitt des Lichtleiters kann zu einem gewissen Grad noch bewegbar sein, wobei die Dimensionen des Lichtleitergehäuses die Bewegbarkeit des Lichtleiters vorgeben. Demnach hat der Lichtleiter den benötigten Bewegungsfreiraum und kann somit eine notwendige Positionsänderung auf Grund einer Verschwenkung der Lichtabstrahlvorrichtung durchführen, wobei diese Positionsänderung bzw. Bewegung des Lichtleiters im Wesentlichen beschädigungsfrei erfolgen kann, da sich der Lichtleiter an der Innenfläche des Lichtleitergehäuses nicht verhaken kann und vor Bauteilen in der näheren Umgebung geschützt ist. Die benötige Beweglichkeit des Lichtleiters, um die besagte Verschwenkung auszugleichen, und die gleichzeitige kontrollierte Führung der Bewegung in eine durch das Lichtleitergehäuse vorgegebene Richtung bzw. Richtungen kann mit dem erfindungsgemäßen Lichtleitergehäuse besonders effizient erzielt werden. Die Verschwenkvorrichtung weist vorzugsweise ein erstes Verschwenkmittel auf, welches die Lichtabstrahlvorrichtung, insbesondere die Haltevorrichtung, um zumindest eine Schwenkachse, vorzugsweise um zwei Schwenkachsen, verschwenkt, wobei die zwei Schwenkachsen insbesondere eine horizontale und eine vertikale Schwenkachse umfassen. Die Verschwenkvorrichtung kann ein zweites Verschwenkmittel aufweisen, welches dazu eingerichtet ist, den Lichtemitter und das Optiksystem um zumindest eine Schwenkachse, vorzugsweise um zwei Schwenkachsen, zu verschwenken. Damit können beispielsweise einerseits die Haltevorrichtung und andererseits der Lichtemitter mit dem Optiksystem separat voneinander verschwenkt werden. Als erstes und/oder zweites Verschwenkmittel können insbesondere ein Linearantrieb und/oder ein Schrittmotor vorgesehen sein.

Erfindungsgemäß sind zumindest 20% bis 30%, vorzugsweise 30% bis 50%, oder mehr als 50% der Gesamtlänge des Lichtleiters innerhalb des Lichtleitergehäuses angeordnet. Dadurch kann der benötigte Bewegungsfreiraum des Lichtleiters auf Grund der Verschwenkung der Haltevorrichtung oder der Lichtabstrahlvorrichtung gewährleistet werden, wobei einerseits die Bewegung des Lichtleiters kontrollierbar erfolgen kann und andererseits der Lichtleiter selbst beschädigungsfrei bleibt.

Es kann ein Abschnitt des Lichtleitergehäuses gekrümmt sein. Vorteilhafterweise kann damit eine ideale Anpassung des Lichtleitergehäuses an den räumlichen Verlauf des Lichtleiters vorgenommen werden. Weist beispielsweise ein Abschnitt des Lichtleiters auf Grund der Position der Lichtabstrahlvorrichtung relativ zu dem Leuchtmittel eine Krümmung auf, kann das Lichtleitergehäuse, in welchem der gekrümmte Abschnitt des Lichtleiters angeordnet ist, ebenfalls eine Krümmung aufweisen.

Vorzugsweise ist die Krümmung des gekrümmten Abschnitts des Lichtleitergehäuses geringer oder gleich der Maximalkrümmung des Lichtleiters. Mit anderen Worten ist der gekrümmte Abschnitt des Lichtleitergehäuses weniger stark gekrümmt im Vergleich zu der höchst zulässigen Krümmung des Lichtleiters. Die Maximalkrümmung des Lichtleiters definiert jene Krümmung des Lichtleiters, welche keinesfalls überschritten werden sollte, da es sonst zu einer Beschädigung des Lichtleiters kommen kann (der Lichtleiter kann beim Überschreiten beispielsweise knicken). Vorteilhafterweise kann durch diese bevorzugte Ausgestaltung des gekrümmten Abschnitts des Lichtleitergehäuses die Maximalkrümmung des Lichtleiters bei einer Bewegung des Lichtleiters nicht überschritten werden, da die Krümmung des gekrümmten Abschnitts des Lichtleitergehäuses ein Überschreiten der Maximalkrümmung verhindert. Damit kann ein Knicken oder Brechen des Lichtleiters verhindert werden.

Vorzugsweise liegt das zumindest eine Lichtleitergehäuse in einer Ebene, welche orthogonal auf die horizontale oder vertikale Schwenkachse ist. Dadurch ergibt sich der Vorteil, dass die Bewegung des Lichtleiters bei einer vertikalen oder horizontalen Verschwenkung der Haltevorrichtung oder der Lichtabstrahlvorrichtung minimiert wird, wobei dies wiederum die Lebensdauer des Lichtleiters erhöht.

Um eine einfache und kostengünstige Herstellung zu gewährleisten, kann das Lichtleitergehäuse einteilig ausgestaltet sein oder eine erste und eine zweite Führungsschale umfassen, welche miteinander verbindbar sind, wobei im Inneren des Lichtleitergehäuses ein Führungskanal gebildet ist. Bei der zweiteiligen Ausgestaltung kann die erste oder die zweite Führungsschale an der Haltevorrichtung befestigt sein und die jeweils andere Führungsschale kann mit der an der Haltevorrichtung befestigten Führungsschale verbindbar sein. Die Verbindung der beiden Führungsschalen miteinander ist vorzugsweise lösbar, beispielsweise über Schraub-, Steck- oder Klemmverbindungen. Damit kann vorteilhafterweise ein besonders einfacher Zugang in das Innere des Lichtleitergehäuses bzw. zu dem Führungskanal erzielt werden. Dies ist insbesondere beim Einbringen des Lichtleiters in das Lichtleitergehäuse bzw. beim Entnehmen des Lichtleiters aus dem Lichtleitergehäuse vorteilhaft. Die einteilige oder zweiteilige Ausführungsform des Lichtleitergehäuses ist insbesondere aus Kunststoff gefertigt und wird vorzugsweise in einem Spritzgussverfahren oder mittels 3D-Druck hergestellt.

Um den zumindest einen Lichtleiter effizient zu schützen, ist vorzugsweise der im Inneren des Lichtleitergehäuses gebildete Führungskanal umfangseitig geschlossen und weist eine Lichtleitereintrittsöffnung und eine Lichtleiteraustrittsöffnung auf. Im eingebauten Zustand tritt der Lichtleiter vorzugsweise bei der Lichteintrittsöffnung in das Lichtleitergehäuse ein und bei der Lichtleiteraustrittsöffnung aus dem Lichtleitergehäuse aus. Innerhalb des Lichtleitergehäuse, also in dem Bereich des Lichtleitergehäuses, der zwischen der Lichtleitereintrittsöffnung und der Lichtleiteraustrittsöffnung liegt, verläuft bzw. bewegt sich der Lichtleiter in einer durch die Dimensionen des Lichtleitergehäuses bzw. des Führungskanals vorgegebenen räumlichen Beschränkung, wobei durch die umfangseitige Geschlossenheit des Führungskanals der Lichtleiter über die gesamte Länge des Lichtleitergehäuses umfangseitig geschützt und geführt werden kann.

Vorzugsweise ist die Länge des Führungskanals geringer als die Länge des Lichtleiters. Die Länge des Führungskanals kann entsprechend dem Verlauf des Lichtleiters gewählt werden, wobei insbesondere jene Abschnitte des Lichtleiters, welche bei einer Bewegung des Lichtleiters durch benachbarte Bauteile beschädigt werden können, innerhalb des Führungskanals angeordnet sein können.

Um eine geführte Bewegung des Lichtleiters zu erreichen, kann die Breite des Führungskanals größer sein als der Durchmesser des Lichtleiters, und/oder die Höhe des Führungskanals kann gleich dem Durchmesser des Lichtleiters sein. Durch die größere Breite des Führungskanals im Vergleich zu dem Lichtleiterdurchmesser kann sich der Lichtleiter in einer durch die Breite des Führungskanals vorgegebenen Ebene bewegen. Vorteilhafterweise können dadurch Bewegungen des Lichtleiters ausgeglichen werden. Die Höhe des Führungskanals kann gleich dem Lichtleiterdurchmesser sein, die Höhe kann aber auch beispielsweise 1% bis 10 % größer sein als der Lichtleiterdurchmesser. Dadurch ist die Bewegung des Lichtleiters in einer auf die Breite des Führungskanals orthogonalen Richtung stärker beschränkt als die Bewegung des Lichtleiters entlang der Breite des Führungskanals. Diese Ausgestaltung des Führungskanals ermöglicht eine besonders präzise Führung des Lichtleiters, wobei gleichzeitig der benötigte Bewegungsfreiraum erreicht werden kann.

Um die Reibung des Lichtleiters innerhalb des Führungskanals zu minimieren, kann der Führungskanal aus einem abriebfesten Material hergestellt oder mit einem abriebfesten Material beschichtet sein. Die Wahl des Materials kann entsprechend dem Lichtleitermaterial gewählt werden. Der Lichtleiter weist vorzugsweise eine äußere Schicht auf, welche beispielsweise Kunststoff, ein Elastomer oder ein Metall umfassen kann. Das Material der Innenfläche des Führungskanals, welche den Lichtleiter kontaktiert, kann dann so gewählt werden, dass die Reibung minimal wird.

Vorzugsweise umfasst der zumindest eine Lichtleiter ein Lichtleitkabel, vorzugsweise ein Glasfaserkabel.

Als Leuchtmittel kann zumindest eine Leuchtdiode oder zumindest eine Laserdiode vorgesehen sein. Diese Leuchtmittel weisen vorteilhafterweise eine hohe Leuchtkraft und gleichzeitig eine geringe Bauteilgröße auf.

Bevorzugt umfasst das Optiksystem der Lichtabstrahlvorrichtung einen Reflektor, beispielsweise einen Parabolspiegel oder einen Freiformreflektor, und/oder eine Projektionsoptik. Das Optiksystem kann auch einen Ellipsoidreflektor oder eine Projektionslinse umfassen. Insbesondere ist das Optiksystem dazu eingerichtet eine gesetzeskonforme Lichtverteilung auf eine Fahrbahn zu projizieren. Wenn das Optiksystem Reflektoren umfasst, ist vorzugsweise der Lichtemitter der Lichtabstrahlvorrichtung im Brennpunkt des Reflektors angeordnet. Insbesondere kann die Lichtabstrahlvorrichtung auch ein Linsensystem aufweisen, welches (in Ausbreitungsrichtung des abgestrahlten Lichts) nach dem Optiksystem angeordnet ist, wobei das Linsensystem dazu eingerichtet ist, eine Lichtverteilung zu erzeugen. Das Linsensystem kann außerhalb oder innerhalb der Lichtabstrahlvorrichtung angeordnet sein. Im Wesentlichen kann ein beliebiges dem Fachmann bekanntes Projektionssystem und/ oder ein Reflexionssystem, welches für eine Verwendung in einem Kraftfahrzeugscheinwerfer ausgebildet ist, und dazu eingerichtet ist, eine Lichtverteilung auf eine Fahrbahn abzustrahlen, das Optiksystem umfassen.

Vorzugsweise weist der Lichtemitter der Lichtabstrahlvorrichtung ein Wellenlängenkonversionsmittel auf, welches dazu vorgesehen ist, das mit dem Leuchtmittel erzeugte Licht in weißes Licht zu konvertieren, bevor es auf das Optiksystem abgestrahlt wird.

In dieser Offenbarung umfasst der Begriff "Lichtleiter" zumindest einen Lichtleiter, wobei dieser auch mehrere Lichtleiter, welche beispielsweise in einem Lichtleiterbündel angeordnet sein können, aufweisen kann. Der zumindest eine Lichtleiter ist vorzugsweise aus einer oder mehreren lichtleitenden Fasern aufgebaut, welche beispielsweise aus Quarzglas oder Kunststoff hergestellt sein können. Die Lichtleitung bzw. die Ausbreitung des Lichts innerhalb des Lichtleiters erfolgt insbesondere durch Totalreflexion des Lichts an der Grenzfläche des Lichtleiters.

Im Rahmen dieser Beschreibung sind die Begriffe "oben", "unten", "horizontal", "vertikal" als Angaben der Ausrichtung zu verstehen, wenn die Vorrichtung in einem Kraftfahrzeugscheinwerfer angeordnet ist, und dieser in einer normalen Benutzungsstellung, nachdem er in einem im Kraftfahrzeug eingebaut wurde, vorliegt.

Die Erfindung wird nachstehend anhand eines bevorzugten Ausführungsbeispiels, auf das sie jedoch nicht beschränkt sein soll, noch weiter erläutert. In der Zeichnung zeigt:
Fig. 1 eine perspektivische Ansicht der erfindungsgemäßen Vorrichtung;
Fig. 2 eine Detailansicht des Lichtleitergehäuses der Vorrichtung;
Fig. 3 eine perspektivische Ansicht des Lichtleitergehäuses mit einer ersten und einer zweiten Führungsschale;
Fig. 4 eine perspektivische Ansicht des Lichtleitergehäuses gemäß Fig. 3 ohne der zweiten Führungsschale;
Fig. 5 die erste Führungsschale des Lichtleitergehäuses; und
Fig. 6 die erste und zweite Führungsschale des Lichtleitergehäuses im verbundenen Zustand.

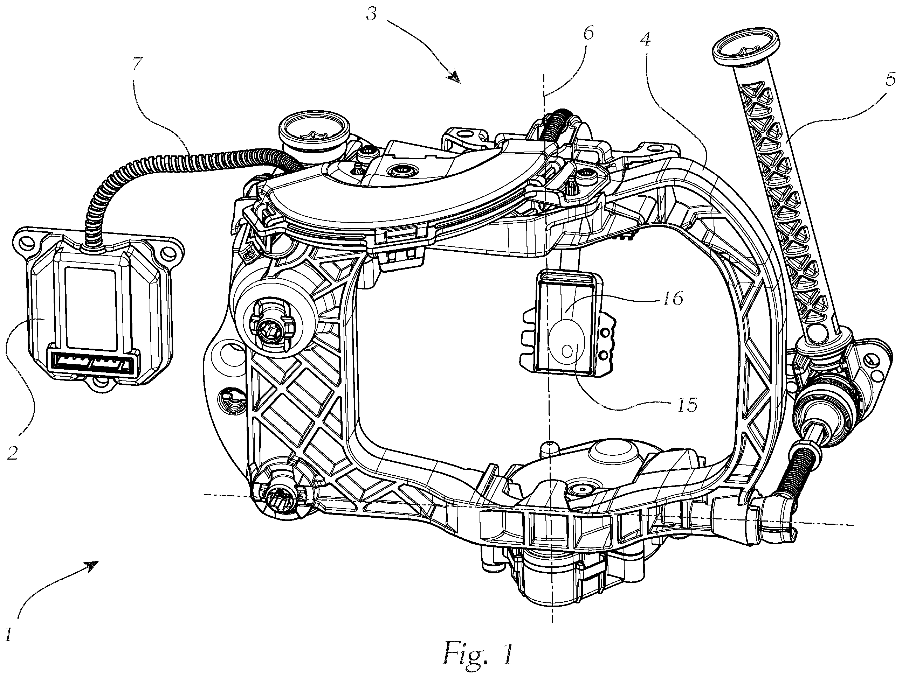

Fig. 1 zeigt eine erfindungsgemäße Vorrichtung 1 zur Erzeugung und Abstrahlung von Licht, wobei die Vorrichtung 1 für einen Kraftfahrzeugscheinwerfer (nicht gezeigt) vorgesehen ist. Die Vorrichtung 1 umfasst ein Leuchtmittel 2, welches dazu vorgesehen ist, Licht zu erzeugen, und eine Lichtabstrahlvorrichtung 3, welche dazu vorgesehen ist, das von dem Leuchtmittel 2 erzeugte Licht abzustrahlen. In der gezeigten Ausführungsform gemäß Fig. 1 ist die Lichtabstrahlvorrichtung 3 von dem Leuchtmittel 2 beabstandet und das Leuchtmittel 2 außerhalb der Lichtabstrahlvorrichtung 3 angeordnet. Die Lichtabstrahlvorrichtung 3 umfasst eine Haltevorrichtung 4, an welcher ein Lichtemitter 16 und ein Optiksystem 15 befestigt sind, wobei der Lichtemitter 16 das Licht auf das Optiksystem 15 abstrahlt. Das Optiksystem 15 ist dazu eingerichtet, eine Lichtverteilung zu erzeugen und kann einen Reflektor, ein Projektionssystem o.Ä. umfassen. Mit einer Verschwenkvorrichtung 5 ist die Lichtabstrahlvorrichtung 3 um zumindest eine Schwenkachse 6, vorzugsweise zwei Schwenkachsen, beispielsweise eine horizontale und/oder eine vertikale Schwenkachse, verschwenkbar. Zumindest ein Lichtleiter 7 ist dazu vorgesehen, das von dem Leuchtmittel 2 erzeugte Licht an die Lichtabstrahlvorrichtung 3 zu leiten. Insbesondere wird das Licht von dem Leuchtmittel 2 an den Lichtemitter 16 der Lichtabstrahlvorrichtung 3 geleitet. Dazu weist der Lichtleiter 7 eine Lichteinkoppelfläche auf, wobei das von dem Leuchtmittel 2 erzeugte Licht auf die Lichteinkoppelfläche trifft und in den Lichtleiter 7 eintritt. Innerhalb des Lichtleiters 7 wird das Licht an eine Lichtaustrittsfläche des Lichtleiters 7 geleitet, wobei das Licht über die Lichtaustrittsfläche austritt und auf den Lichtemitter 16 der Lichtabstrahlvorrichtung 3 abgestrahlt wird. Von dem Lichtemitter 16 wird das Licht in weiterer Folge auf das Optiksystem 15 abgestrahlt, welches eine Lichtverteilung erzeugt und insbesondere auf eine Fahrbahn abstrahlt.

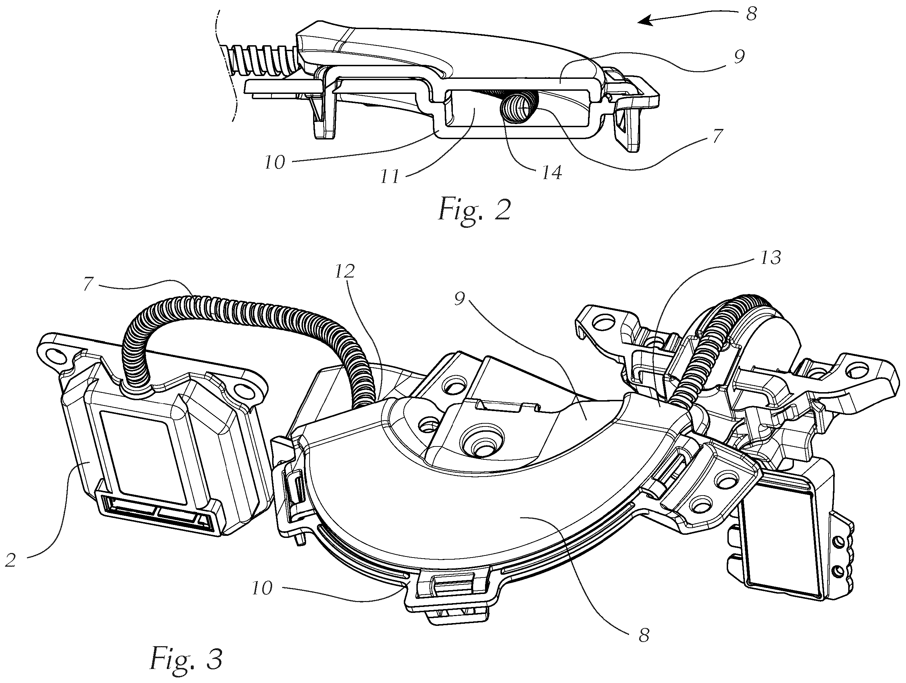

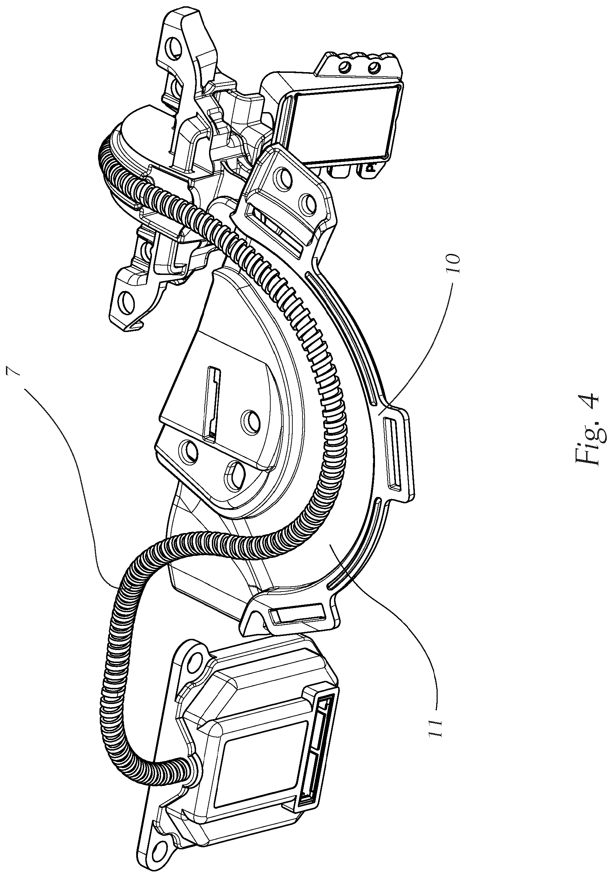

Wie in Fig. 1 und insbesondere in den Fig. 3 und 4 erkennbar, ist zumindest ein Abschnitt des zumindest einen Lichtleiters 7 in einem Lichtleitergehäuse 8 angeordnet. Der in dem Lichtleitergehäuse 8 angeordnete zumindest eine Abschnitt des zumindest einen Lichtleiters 7 wird bei einer Bewegung des Lichtleiters 7 auf Grund einer Verschwenkung der Haltevorrichtung 4 oder der Lichtabstrahlvorrichtung 3 durch die Verschwenkvorrichtung 5 innerhalb des Lichtleitergehäuses 8 geführt. Wie in Fig. 1 gezeigt, liegt das Lichtleitergehäuse 8 in einer Ebene, welche orthogonal auf die vertikale Schwenkachse 6 ist. Welcher Abschnitt des Lichtleiters 7 in dem Lichtleitergehäuse 8 geführt wird, ergibt sich auf Grund des Verlaufs des Lichtleiters 7 zwischen dem Leuchtmittel 2 und der Lichtabstrahlvorrichtung 3.

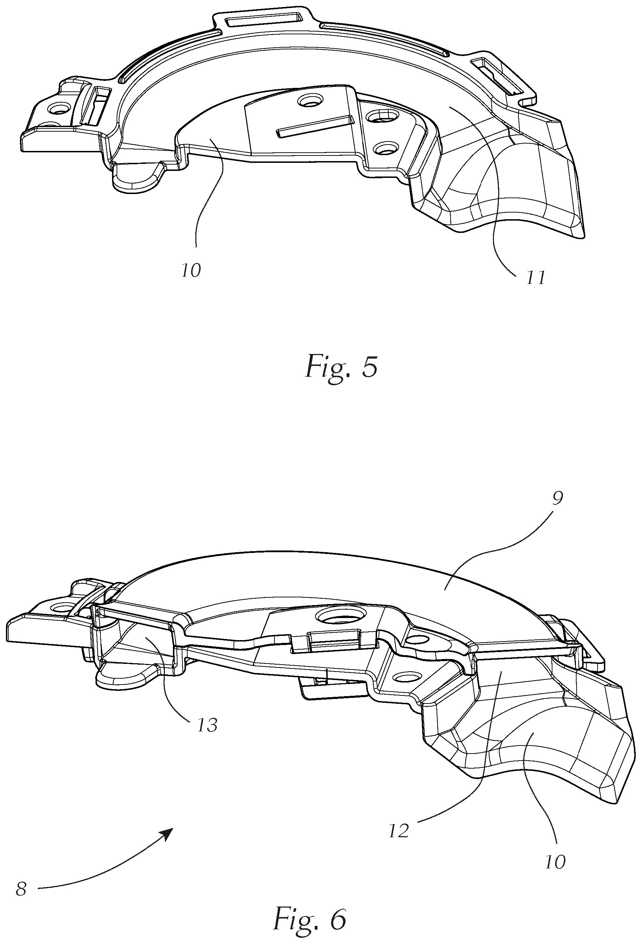

Wie in den Fig. 5 und 6 ersichtlich, ist ein Abschnitt des Lichtleitergehäuses 8 gekrümmt. Der Krümmungsradius des gekrümmten Abschnitts des Lichtleitergehäuses 8 ist größer oder gleich dem Mindestbiegeradius des Lichtleiters 7.

Das Lichtleitergehäuse 8 kann einteilig oder, wie beispielsweise in Fig. 5 und 6 gezeigt, zweiteilig ausgestaltet sein, wobei eine erste Führungsschale 9 und eine zweite Führungsschale 10 vorgesehen sind, welche miteinander verbindbar sind. Im Inneren des Lichtleitergehäuses 8 ist ein Führungskanal 11 gebildet. Der im Inneren des Lichtleitergehäuses 8 gebildete Führungskanal 11 ist umfangseitig geschlossen und weist eine Lichtleitereintrittsöffnung 12 und eine Lichtleiteraustrittsöffnung 13 auf. Die Länge des Führungskanals 11 ist geringer als die Länge des Lichtleiters 7. Die Breite des Führungskanals 11 ist hingegen größer als der Durchmesser des Lichtleiters 7, und die Höhe des Führungskanals 11 ist im Wesentlichen gleich dem Durchmesser des Lichtleiters 7. Dies ist besonders gut in Fig. 2 erkennbar. Der Lichtleiter 7 ist über die gesamte Breite des Führungskanals 11 bewegbar, wobei der zur Verfügung stehende Bewegungsraum in der Breite größer ist als in der Höhe. Die Bewegung des Lichtleiters 7 in einer vertikalen Richtung ist im Verglich zu einer Bewegung in horizontaler Richtung stark eingeschränkt, da die Höhe des Führungskanals 11 im Wesentlichen dem Durchmesser des Lichtleiters 7 entspricht. Der Führungskanal 11 ist aus einem abriebfesten Material hergestellt oder mit einem abriebfesten Material beschichtet.

Der Lichtleiter 7 umfasst ein Lichtleitkabel, vorzugsweise ein Glasfaserkabel. Wie in Fig. 2 ersichtlich, ist der Lichtleiter 7 von einer Schutzhülle 14 umgeben, welche eine rillenförmige Oberflächenstruktur aufweist.

Als Leuchtmittel 2 ist zumindest eine Leuchtdiode oder zumindest eine Laserdiode vorgesehen.

Das Optiksystem 15 der Lichtabstrahlvorrichtung 3 umfasst einen Reflektor, beispielsweise einen Parabolspiegel oder einen Freiformreflektor, kann aber auch eine Projektionsoptik umfassen. Der Lichtemitter 16 der Lichtabstrahlvorrichtung 3 weist ein Wellenlängenkonversionsmittel 16 auf, welches dazu vorgesehen ist, das mit dem Leuchtmittel 2 erzeugte Licht in weißes Licht zu konvertieren, bevor es auf das Optiksystem 15 abgestrahlt wird. Das Optiksystem 15 kann auch ein Linsensystem (nicht gezeigt) aufweisen.

## Patentansprüche

1. Kraftfahrzeugscheinwerfer aufweisend eine Vorrichtung (1) zur Erzeugung und Abstrahlung von Licht, wobei die Vorrichtung (1) umfasst:
- ein Leuchtmittel (2), welches dazu vorgesehen ist, Licht zu erzeugen,
- eine Lichtabstrahlvorrichtung (3), welche dazu vorgesehen ist, das von dem Leuchtmittel (2) erzeugte Licht auf eine Fahrbahn abzustrahlen, wobei die Lichtabstrahlvorrichtung (3) eine Haltevorrichtung (4) umfasst, an welcher ein Lichtemitter (16) und ein Optiksystem (15) befestigt sind, wobei der Lichtemitter (16) das Licht auf das Optiksystem (15) abstrahlt und das Optiksystem (15) dazu eingerichtet ist, eine Lichtverteilung zu erzeugen, wobei das Leuchtmittel (2) außerhalb der Lichtabstrahlvorrichtung (3) angeordnet ist,
- eine Verschwenkvorrichtung (5), mit welcher die Lichtabstrahlvorrichtung (3) um zumindest eine Schwenkachse (6), vorzugsweise zwei Schwenkachsen, beispielsweise eine horizontale und/oder eine vertikale Schwenkachse, verschwenkbar ist, und
- zumindest einen Lichtleiter (7), welcher eine Lichteinkoppelfläche aufweist, wobei das von dem Leuchtmittel (2) erzeugte Licht auf die Lichteinkoppelfläche trifft, in den Lichtleiter (7) eintritt, und innerhalb des Lichtleiters (7) an eine Lichtaustrittsfläche des Lichtleiters (7) geleitet wird, wobei das Licht über die Lichtaustrittsfläche austritt und auf den Lichtemitter (16) der Lichtabstrahlvorrichtung (3) abgestrahlt wird, wobei zumindest ein Abschnitt des zumindest einen Lichtleiters (7) in einem Lichtleitergehäuse (8) angeordnet ist, so dass der in dem Lichtleitergehäuse (8) angeordnete zumindest eine Abschnitt des zumindest einen Lichtleiters (7) bei einer Bewegung des Lichtleiters (7) auf Grund einer Verschwenkung der Lichtabstrahlvorrichtung (3) durch die Verschwenkvorrichtung (5) innerhalb des Lichtleitergehäuses (8) geführt wird,
**dadurch gekennzeichnet, dass**
zumindest 20% bis 30%, vorzugsweise 30% bis 50%, oder mehr als 50% der Gesamtlänge des Lichtleiters (7) innerhalb des Lichtleitergehäuses (8) angeordnet sind, wobei das Lichtleitergehäuse (8) von dem Leuchtmittel (2) und dem Lichtemitter (16) beabstandet angeordnet ist.

2. Kraftfahrzeugscheinwerfer nach Anspruch 1, wobei ein Abschnitt des Lichtleitergehäuses (8) gekrümmt ist, wobei vorzugsweise die Krümmung des gekrümmten Abschnitts des Lichtleitergehäuses (8) geringer oder gleich der Maximalkrümmung des Lichtleiters (7) ist.

3. Kraftfahrzeugscheinwerfer nach Anspruch 1 oder 2, wobei das Lichtleitergehäuse (8) in einer Ebene liegt, welche orthogonal auf die horizontale oder vertikale Schwenkachse ist.

4. Kraftfahrzeugscheinwerfer nach einem der Ansprüche 1 bis 3, wobei das Lichtleitergehäuse (8) einteilig ausgestaltet ist oder eine erste (9) und eine zweite Führungsschale (10) umfasst, welche miteinander verbindbar sind, wobei im Inneren des Lichtleitergehäuses (8) ein Führungskanal (11) gebildet ist.

5. Kraftfahrzeugscheinwerfer nach Anspruch 4, wobei der im Inneren des Lichtleitergehäuses (8) gebildete Führungskanal (11) umfangseitig geschlossen ist und eine Lichtleitereintrittsöffnung (12) und eine Lichtleiteraustrittsöffnung (13) aufweist.

6. Kraftfahrzeugscheinwerfer nach Anspruch 4 oder 5, wobei die Länge des Führungskanals (11) geringer ist als die Länge des Lichtleiters (7).

7. Kraftfahrzeugscheinwerfer nach einem der Ansprüche 4 bis 6, wobei die Breite des Führungskanals (11) größer ist als der Durchmesser des Lichtleiters (7), und/oder dass die Höhe des Führungskanals (11) gleich dem Durchmesser des Lichtleiters (7) ist.

8. Kraftfahrzeugscheinwerfer nach einem der Ansprüche 4 bis 7, wobei der Führungskanal (11) aus einem abriebfesten Material hergestellt oder mit einem abriebfesten Material beschichtet ist.

9. Kraftfahrzeugscheinwerfer nach einem der Ansprüche 1 bis 8, wobei der zumindest eine Lichtleiter (7) ein Lichtleitkabel, vorzugsweise ein Glasfaserkabel, umfasst.

10. Kraftfahrzeugscheinwerfer nach einem der Ansprüche 1 bis 9, wobei als Leuchtmittel (2) zumindest eine Leuchtdiode oder zumindest eine Laserdiode vorgesehen ist.

11. Kraftfahrzeugscheinwerfer nach einem der Ansprüche 1 bis 10, **dadurch gekennzeichnet, dass** das Optiksystem (15) der Lichtabstrahlvorrichtung (3) einen Reflektor, beispielsweise einen Parabolspiegel oder einen Freiformreflektor, und/oder eine Projektionsoptik umfasst.

12. Kraftfahrzeugscheinwerfer nach einem der Ansprüche 1 bis 11, wobei der Lichtemitter (16) der Lichtabstrahlvorrichtung (3) ein Wellenlängenkonversionsmittel (16) aufweist, welches dazu vorgesehen ist, das mit dem Leuchtmittel (2) erzeugte Licht in weißes Licht zu konvertieren, bevor es auf das Optiksystem (15) abgestrahlt wird.

## Claims

1. Motor vehicle headlight comprising a device (1) for generating and emitting light, wherein the device (1) comprises:
- a light source (2) designed to generate light,
- a light-emitting device (3) designed to direct the light generated by the light source (2) onto a roadway, wherein the light-emitting device (3) comprises a mounting device (4) to which a light emitter (16) and an optical system (15) are attached, wherein the light emitter (16) emits light onto the optical system (15) and the optical system (15) is configured to produce a light distribution, wherein the light source (2) is arranged outside the light-emitting device (3),
- a pivoting device (5) by means of which the light-emitting device (3) can be pivoted about at least one pivot axis (6), preferably two pivot axes, for example a horizontal and/or a vertical pivot axis, and
- at least one light guide (7) having a light-coupling surface, wherein the light generated by the light source (2) strikes the light-coupling surface, enters the light guide (7), and is guided within the light guide (7) to a light-emitting surface of the light guide (7), whereupon the light exits via the light-emitting surface and is emitted onto the light emitter (16) of the light-emitting device (3), wherein at least one section of the at least one light guide (7) is arranged in a light guide housing (8), such that the at least one section of the at least one light guide (7) located within the light guide housing (8) is guided within the light guide housing (8) when the light guide (7) moves due to the light-emitting device (3) being pivoted by the pivoting device (5),
**characterized in that**
at least 20% to 30%, preferably 30% to 50%, or more than 50% of the total length of the light guide (7) is located within the light guide housing (8), wherein the light guide housing (8) is spaced apart from the light source (2) and the light emitter (16).

2. Motor vehicle headlight according to claim 1, wherein a section of the light guide housing (8) is curved, wherein, preferably, the curvature of the curved section of the light guide housing (8) is less than or equal to the maximum curvature of the light guide (7).

3. Motor vehicle headlight according to claim 1 or 2, wherein the light guide housing (8) lies in a plane that is orthogonal to the horizontal or vertical pivot axis.

4. Motor vehicle headlight according to any one of claims 1 through 3, wherein the light guide housing (8) is constructed as a single piece or comprises a first (9) and a second guide shell (10) that can be connected to one another, wherein a guide channel (11) is formed inside the light guide housing (8).

5. Motor vehicle headlight according to claim 4, wherein the guide channel (11) formed inside the light guide housing (8) is closed along its periphery and has a light guide inlet opening (12) and a light guide outlet opening (13).

6. Motor vehicle headlight according to claim 4 or 5, wherein the length of the guide channel (11) is less than the length of the light guide (7).

7. Motor vehicle headlight according to any one of claims 4 through 6, wherein the width of the guide channel (11) is greater than the diameter of the light guide (7), and/or the height of the guide channel (11) is equal to the diameter of the light guide (7).

8. Motor vehicle headlight according to any one of claims 4 through 7, wherein the guide channel (11) is made of an abrasion-resistant material or is coated with an abrasion-resistant material.

9. Motor vehicle headlight according to any one of claims 1 through 8, wherein the at least one light guide (7) comprises a light-conducting cable, preferably a fiber-optic cable.

10. Motor vehicle headlight according to any one of claims 1 through 9, wherein at least one light-emitting diode or at least one laser diode is provided as the light source (2).

11. Motor vehicle headlight according to any one of claims 1 through 10, **characterized in that** the optical system (15) of the light-emitting device (3) comprises a reflector, for example a parabolic mirror or a free-form reflector, and/or a projection optical system.

12. Motor vehicle headlight according to any one of claims 1 through 11, wherein the light emitter (16) of the light-emitting device (3) comprises a wavelength conversion means (16) designed to convert the light generated by the light source (2) into white light before it is emitted onto the optical system (15).

## Revendications

1. Projecteur de véhicule automobile comportant un dispositif (1) destiné à produire et à émettre de la lumière, ledit dispositif (1) comprenant :
- une source lumineuse (2) destinée à produire de la lumière,
- un dispositif de projection de lumière (3) destiné à projeter la lumière produite par la source lumineuse (2) sur une chaussée, le dispositif de projection de lumière (3) comprenant un dispositif de fixation (4) sur lequel sont fixés un émetteur de lumière (16) et un système optique (15), l'émetteur de lumière (16) émettant la lumière vers le système optique (15) et le système optique (15) étant agencé pour produire une répartition lumineuse, la source lumineuse (2) étant disposée à l'extérieur du dispositif de projection de lumière (3),
- un dispositif de pivotement (5), grâce auquel le dispositif d'émission de lumière (3) peut pivoter autour d'au moins un axe de pivotement (6), de préférence deux axes de pivotement, par exemple un axe de pivotement horizontal et/ou un axe de pivotement vertical, et
- au moins un guide de lumière (7) comportant une surface d'injection de lumière, la lumière produite par la source lumineuse (2) frappant ladite surface d'injection de lumière, pénétrant dans le guide de lumière (7), et est guidée à l'intérieur du guide de lumière (7) vers une surface de sortie de lumière de celui-ci, la lumière sortant par la surface de sortie de lumière et étant émise vers l'émetteur de lumière (16) du dispositif d'émission de lumière (3), au moins une partie dudit au moins un guide de lumière (7) étant disposée dans un boîtier de guide de lumière (8), de sorte que la au moins une partie dudit au moins un guide de lumière (7), disposée dans le boîtier de guide de lumière (8), soit guidée à l'intérieur du boîtier de guide de lumière (8) lors d'un déplacement du guide de lumière (7) dû à un pivotement du dispositif d'émission de lumière (3) par le dispositif de pivotement (5),
**caractérisé en ce que**
au moins 20 % à 30 %, de préférence 30 % à 50 %, ou plus de 50 % de la longueur totale du guide de lumière (7) sont disposés à l'intérieur du boîtier de guide de lumière (8), le boîtier de guide de lumière (8) étant espacé de la source lumineuse (2) et de l'émetteur de lumière (16).

2. Projecteur de véhicule automobile selon la revendication 1, dans lequel une partie du boîtier de guide de lumière (8) est courbée, la courbure de la partie courbée du boîtier de guide de lumière (8) étant de préférence inférieure ou égale à la courbure maximale du guide de lumière (7).

3. Projecteur de véhicule automobile selon la revendication 1 ou 2, dans lequel le boîtier du guide de lumière (8) se trouve dans un plan orthogonal à l'axe de pivotement horizontal ou vertical.

4. Projecteur de véhicule automobile selon l'une des revendications 1 à 3, dans lequel le boîtier de guide de lumière (8) est réalisé d'un seul tenant ou comprend une première coque de guidage (9) et une deuxième coque de guidage (10) qui peuvent être assemblées l'une à l'autre, un canal de guidage (11) étant formé à l'intérieur du boîtier de guide de lumière (8).

5. Projecteur de véhicule automobile selon la revendication 4, dans lequel le canal de guidage (11) formé à l'intérieur du boîtier de guide de lumière (8) est fermé sur son pourtour et présente une ouverture d'entrée (12) et une ouverture de sortie (13) pour le guide de lumière.

6. Projecteur de véhicule automobile selon la revendication 4 ou 5, dans lequel la longueur du canal de guidage (11) est inférieure à la longueur du guide de lumière (7).

7. Projecteur de véhicule automobile selon l'une des revendications 4 à 6, dans lequel la largeur du canal de guidage (11) est supérieure au diamètre du guide de lumière (7), et/ou en ce que la hauteur du canal de guidage (11) est égale au diamètre du guide de lumière (7).

8. Projecteur de véhicule automobile selon l'une des revendications 4 à 7, dans lequel le canal de guidage (11) est fabriqué dans un matériau résistant à l'abrasion ou est recouvert d'un matériau résistant à l'abrasion.

9. Projecteur de véhicule automobile selon l'une des revendications 1 à 8, dans lequel le au moins un guide de lumière (7) comprend un câble à fibres optiques, de préférence un câble à fibres de verre.

10. Projecteur de véhicule automobile selon l'une des revendications 1 à 9, dans lequel au moins une diode électroluminescente ou au moins une diode laser est prévue comme source lumineuse (2).

11. Projecteur de véhicule automobile selon l'une des revendications 1 à 10, **caractérisé en ce que** le système optique (15) du dispositif d'émission lumineuse (3) comprend un réflecteur, par exemple un miroir parabolique ou un réflecteur à forme libre, et/ou une optique de projection.

12. Projecteur de véhicule automobile selon l'une des revendications 1 à 11, dans lequel l'émetteur de lumière (16) du dispositif d'émission lumineuse (3) comporte un moyen de conversion de longueur d'onde (16) destiné à convertir la lumière produite par la source lumineuse (2) en lumière blanche avant qu'elle ne soit émise vers le système optique (15).
